## Europäisches Patentamt

(19) **European Patent Office**

**Office européen des brevets**

(11) Publication number: **0 209 276**
**B1**

(12) **EUROPEAN PATENT SPECIFICATION**

(45) Date of publication of patent specification: **25.04.90**

(51) Int. Cl.⁵: **B 60 S 1/34**

(21) Application number: **86304923.5**

(22) Date of filing: **25.06.86**

(54) **Wiper arm.**

(30) Priority: **10.07.85 FR 8510565**

(43) Date of publication of application:
**21.01.87 Bulletin 87/04**

(45) Publication of the grant of the patent:
**25.04.90 Bulletin 90/17**

(84) Designated Contracting States:
**BE DE GB IT**

(56) References cited:
**DE-A-2 755 918**
**DE-A-2 821 522**
**DE-A-3 329 146**
**DE-A-3 433 106**
**FR-A-2 195 957**
**US-A-4 050 832**

(73) Proprietor: **CHAMPION SPARK PLUG EUROPE S.A.**
**Avenue Leopold III 2a**
**B-7120 Binche (BE)**

(72) Inventor: **South, Alan**
**53, Church Street**
**Willingham Cambridge CB4 5HS (GB)**
Inventor: **Kenney, Alan**
**24 Chapmans Way**
**Over Cambridge, CB4 5PZ (GB)**

(74) Representative: **Abbie, Andrew Kenneth et al**
**A.A. THORNTON & CO. Northumberland House**
**303/306 High Holborn**
**London, WC1V 7LE (GB)**

Courier Press, Leamington Spa, England.

## Description

The present invention relates to a wiper arm, for example for motor vehicles, comprising a mounting head provided with a cap and comprising a channel which is rotatably attached to the mounting head.

Wiper arms of the thus defined type are largely known in the prior art and the two German patent applications DE—A—23 26 183 and DE—A—25 11 013 may be cited. The main disadvantage of the wiper arms disclosed in said two patent applications, i.e. of the conventional wiper arms, is their relatively high production cost, cost which is mainly due (a) to the fact that they necessitate the assembly of numerous parts, (b) to the complexity of certain parts and (c) to the necessary use of relatively expensive materials such as for example special alloys for the mounting head.

The complexity of the conventional wiper arms is for example also due to the fact that the articulation between the mounting head and the channel is realized by means of a rivet. This necessitates in practice the assembly of several supplementary parts, as can be seen in Fig. 2 of the German patent application DE—A—23 26 183.

Lastly the caps described in the two above mentioned German patent applications, and generally most of the conventional caps, are relatively fragile. Thus the removable cap of the German patent application 23 26 183 often breaks at the articulation between the mounting head and the channel.

The main object of the present invention is to provide a wiper arm which eliminates the disadvantages of the above mentioned conventional arms and therefore, essentially, to provide a low cost wiper arm. This object is obtained by a new, substantially simplified design.

Another object of the invention is to provide a wiper arm wherein the cap of the mounting head does not only cover the attachment device which connects the mounting head to the drive shaft of the assembly wiper arm/wiper blade, but which also is capable of locating the channel of the arm in at least two positions with respect to the mounting head.

To this effect the wiper arm according to the invention is characterized by the fact that the cap of the mounting head is provided with two extensions extending substantially parallel to the longitudinal axis of the wiper arm, beyond said articulation between the mounting head and the channel, and that said extensions of the cap are provided with means for locating the channel in at least two different positions with respect to the mounting head.

A feature of one wiper arm embodying the invention is that the articulation between the mounting head and the channel consists of a semi-cylindrical recess in the mounting head, which is capable of cooperating with a corresponding semi-cylindrical surface provided on the channel.

The invention will be better understood when reading the following description of one embodiment of the invention in conjunction with the appended drawings, wherein:

Fig. 1 is a partial longitudinal section of the wiper arm according to the invention;

Fig. 2 is a section similar to that of figure 1 wherein the cap and the channel are in another position with respect to the mounting head;

Fig. 3 is a section similar to that of figure 1 wherein the channel is in another position with respect to the mounting head;

Fig. 4 is a partial and schematic perspective view wherein the different elements of the wiper arms are in the same position as in figure 1;

Fig. 5 is a partial and schematic perspective view wherein the different elements of the wiper arm are in the same position as in figure 2;

Fig. 6 is a schematic and exploded perspective view of the wiper arm according to the invention;

Fig. 7 is a top view, at a larger scale, of one of the elements of the wiper arm according to the invention;

Fig. 8 is a section along line VIII—VIII of the element of figure 7.

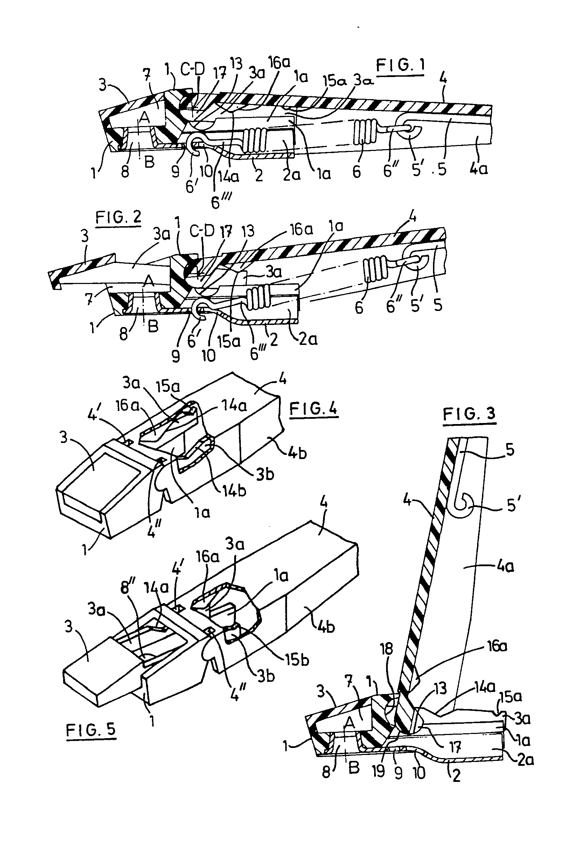

According to Fig. 1, 2 and 3 the wiper arm illustrated comprises:

a mounting head 1 provided with a base plate 2 and with a cap 3, cap which is capable of sliding in a direction which is substantially parallel to the longitudinal axis of the wiper arm;

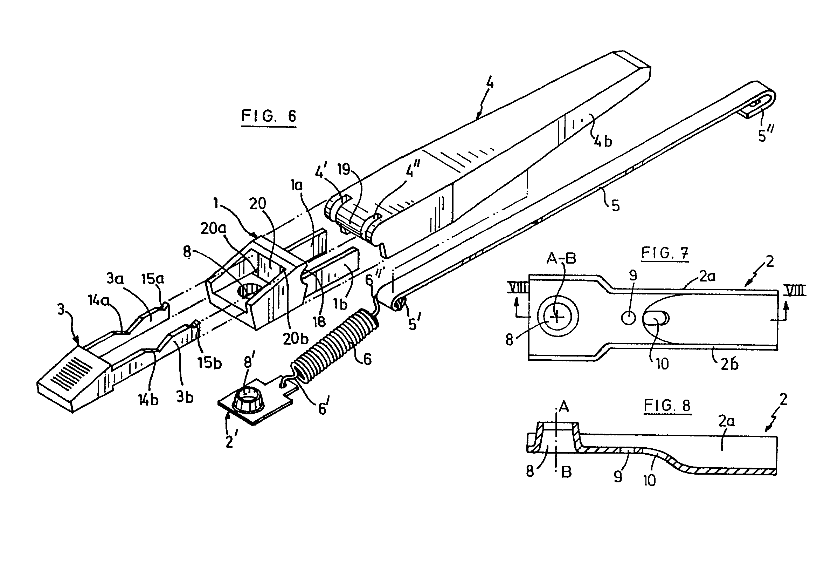

a channel 4 provided with the lateral walls 4a, 4b and with the extension rod 5 at the free end of which are provided the means 5″ (Fig. 6) for attaching thereto a wiper blade;

a helical spring 6 (not shown on Fig. 3) which links the base plate 2 of the mounting head 1 to the extension rod 5 of the channel 4.

As already indicated above the channel 4 can take different positions with respect to the mounting head 1. In other words, the channel 4 can rotate with respect to the mounting head 1. For the relative positions of the mounting head 1 and the channel 4 shown in Fig. 1 and 2 (and consequently in Fig. 4 and 5) the channel 4 rotates about the theoretical axis C—D.

The articulation between the mounting head 1 and the channel 4 is implemented under the form of a semi-cylindrical recess 18 (Fig. 3) provided in the mounting head 1, to which the recess corresponds a semi-cylindrical surface 19 (Fig. 3) provided on the channel 4. The extension rod 5 and the channel 4 can thus slightly rotate with respect to the mounting head 1. Such small rotational movements are necessary for maintaining the wiper blade firmly on the windshield under the action of the helical spring 6.

When the channel 4 is pushed manually into the position of Fig. 3, position which is necessary when the windshield must be cleaned by hand, the semi-cylindrical surface 19 of the channel 4 jumps out of the recess 18 of the mounting head 1. This position of the channel 4 is a stable position because the connecting points 5′, 9 of the helical spring 6 are positioned in such a way that the spring acts in the counterclockwise direction (on Fig. 3).

As can be seen best on Fig. 6, but also on Fig. 1 through 5, the mounting head 1 comprises, on the side of the semi-cylindrical recess 18, two extensions 1a, 1b which extend, when the wiper arm is assembled, substantially parallel to the longitudinal axis of the wiper arm, inside the channel 4 and beyond the articulation 18, 19.

Each of the two extensions 1a, 1b of the mounting head 1 is provided with a semi-cylindrical recess 13 (Fig. 3) capable of receiving the semi-cylindrical surface 19 of the channel 4 when said channel is in the position shown in fig. 3. This feature reinforces the stability of this position of the channel 4. It is furthermore to be noted that when the channel 4 is in the position of Fig. 3, the straight portion 6''' of the helical spring 6 is located in the slot 17 provided in the central and lower portion of the semi-cylindrical surface of the channel 4.

Just as the mounting head 1 the cap 3 also comprises two extensions 3a, 3b extending parallel to the longitudinal axis of the wiper arm, beyond the articulation 18, 19 between the mounting head 1 and the channel 4. Each of the two extensions 3a, 3b of the cap 3 comprises two recesses 14a, 15a and 14b, 15b of different dimensions. Said recesses are the means for locating the channel 4 in two different positions with respect to the mounting head 1.

To the locating means 14a, 15a and 14b, 15b of the cap 3 correspond the locating means 16a and 16b (not shown) on the channel 4. Said locating means on the channel 4 consist of the projections 16a and 16b capable of cooperating respectively with either recesses 14a, 14b or recesses 15a, 15b of the cap 3. As can be seen on the drawings the recesses 14a, 15a and 14b, 15b as well as the corresponding projections 16a and 16b may, for example, have a triangular shape.

The Fig. 1, 2 and 4, 5 show that the cap 3 can take different positions with respect to the mounting head 1. In fact that cap 3 can slide from its position in Fig. 2, 5 to its position in Fig. 1, 4. To this effect the wall 20 (Fig. 6) of the mounting head 1 is provided with two openings 20a, 20b through which the two extensions 3a, 3b of the cap 3 pass.

On Fig. 2 and 5 the cap 3 and the channel 4 are in the mounting position, i.e. in the position wherein said two elements are when the wiper arm is ready for being mounted onto a vehicle. In this position the triangular projections 16a and 16b of the channel 4 respectively cooperate with the triangular recesses 15a and 15b of the extensions 3a, 3b of the cap 3.

In Fig. 1 and 4 the cap 3 and the channel 4 are in the working position of the wiper arm. In this position the triangular projections 16a and 16b of the channel 4 cooperate respectively with the triangular recesses 14a and 14b of the extensions 3a, 3b of the cap 3.

It is to be noted that when the cap 3 is being mounted onto the wiper arm, the extensions 3a, 3b not only pass through the openings 20a, 20b provided in the mounting head 1, but also through the slots 4', 4'' provided in the semi-cylindrical surface 19 of the channel 4. ·

The mounting position (Fig. 2) is a stable position since, in spite of the action of the spring 6, the channel 4 is located by the recesses 15a, 15b of the extensions 3a, 3b of the cap 3. The same is true for the working position (Fig. 1) wherein the channel 4 is located by the recesses 14a, 14b of the extensions 3a, 3b of the cap 3.

When comparing Fig. 1 with Fig. 2 it can be seen that in Fig. 2 (mounting position) the channel 4 is at a certain angle with respect to the base plate 2 of the mounting head 1. This is advantageous when the wiper arm is being mounted on a vehicle because the free end 5'' of the extension rod 5 of the channel 4 does not touch the windshield at that moment. The difference in the position of the channel 4 in Fig. 2 and Fig. 1 is due to the fact that the recesses 15a, 15b and the recesses 14a, 14b of the extensions 3a, 3b of the cap 3 have different depths, the recesses 15a, 15b being less deep than the recesses 14a, 14b.

Fig. 1, 2, 3, 7 and 8 show a first variant of the base plate of the mounting head 1. Said base plate 2 comprises an opening 8 which has the form of a frustum of a cone for receiving the drive shaft of the wiper arm. In the drawings said drive shaft is represented by its geometrical axis A—B. The drive shaft, as well as known in prior art, is provided at its top portion with a thread which penetrates into the space 7 between the cap 3 and the mounting head 1 and onto which a nut is screwed for rigidly attaching the mounting head 1 to the drive shaft. When mounting the base plate 2 onto the mounting head 1 the portion of the plate which forms the opening 8 is inserted from beneath into the circular opening 8'' provided in the mounting head 1.

The base plate 2 also serves for attaching thereto the helical spring 6 by means of the hook 6' which is hooked into the opening 9 of the base plate 2 and provides a passage for a portion of the extremity 6''' of the helical spring 6. At its other extremity 6'' the helical spring 6 is attached to the hook 5' of the extension rod 5 of the channel 4. It is to be noted that the base plate has a substantially U-shaped transverse section with a web with the side walls 2a, 2b.

Fig. 6 shows a simplified variant 2' of the base plate of the mounting head. The base plate 2' comprises only a simple, flat sheet and an opening which has the form of a frustum of a cone 8'. The base plate 2' is also used in the wiper arms shown on Fig. 4 and 5.

On Fig. 6 all the elements of a wiper arm according to the invention are represented. The elements 3, 1 and 4 all fit one into the other and they are principally made of an appropriate plastic material. To the contrary, the elements 2', 6 and 5, which are inserted from beneath into the above mentioned elements 3, 1, 4 are principally made of steel.

In an alternative arrangement, the mounting head 1 and base plate 2 are made in one piece.

**Claims**

1. A wiper arm, for example, for motor vehicles, comprising a mounting head (1) provided with a cap (3) and comprising a channel (4) which is rotatably attached to the mounting head (1), characterized in that the cap (3) of the mounting head (1) is provided with two extensions (3a, 3b) extending substantially parallel to the longitudinal axis of the wiper arm, beyond said articulation (C—D) between the mounting head (1) and the channel (4), and that said extensions (3a, 3b) of the cap (3) are provided with means (14a, 15a and 14b and 15b) for locating the channel (4) in at least two different positions with respect to the mounting head (1).

2. A wiper arm according to claim 1, characterized in that on channel (4) there are provided locating means (16a, 16b) which are capable of cooperating with the locating means (14a, 15a and 14b, 15b) provided on the extensions (3a, 3b) of the cap (3).

3. A wiper arm according to claim 1, characterized in that the locating means provided on the extensions (3a, 3b) of the cap (3) consist of two recesses (15a, 15b) having given dimensions for a first locating position of the channel (4) and of two other recesses (14a, 14b), having larger dimensions, for a second position of the channel (4).

4. A wiper arm according to claims 2 and 3, characterized in that the locating means on the channel (4) consist of two projections (16a and 16b) capable of cooperating with the four recesses (14a, 15a and 14b, 15b) of the extensions (3a, 3b) of the cap (3).

5. A wiper arm according to claim 4, characterized in that the recesses (14a, 15a and 14b, 15b) of the extensions (3a, 3b) of the cap (3) and the projections (16a and 16b) of the channel (4) have a triangular shape.

6. A wiper arm according to claim 1, characterized in that the cap (3) of the mounting head (1) is capable of sliding in a direction substantially parallel to the longitudinal axis of the wiper arm and that for this purpose the mounting head (1) is provided with two openings (20a, 20b) through which the two extensions (3a, 3b) of the cap (3) pass.

7. A wiper arm according to claim 1, characterized in that the articulation between the mounting head (1) and the channel (4) consists of a semi-cylindrical recess (18) in the mounting head (1), semi-cylindrical recess (18) which is capable of cooperating with a corresponding semi-cylindrical surface (19) provided on the channel (4).

8. A wiper arm according to claim 7, characterized in that the semi-cylindrical surface (19) of the channel (4) is provided with two slots (4', 4'') through which the two extensions (3a, 3b) of the cap (3) pass.

9. A wiper arm according to claim 7, characterized in that the mounting head (1) comprises two extensions (1a, 1b) extending substantially parallel to the longitudinal axis of the wiper arm, beyond said articulation (C—D) between the mounting head (1) and the channel (4), and that said extensions (1a, 1b) of the mounting head (1) are each provided with a semi-cylindrical recess (13) capable of receiving said semi-cylindrical surface (19) of the channel (4).

10. A wiper arm according to claim 1 wherein the mounting head (1) comprises a base plate (2, 2') and wherein the channel (4) comprises an extension rod (5) at the free end of which are provided connecting means for connecting thereto a wiper blade, characterized in the base plate (2, 2') of the mounting head (1) is linked to the extension road (5) of the channel (4) by a helical spring (6).

11. A wiper arm according to claim 10, characterized in that the mounting head (1) and its base plate (2, 2') are made in one piece.

12. A wiper arm according to claim 10, characterized in that the mounting head (1), its cap (3) and the channel (4) are made of an appropriate plastic material and that the base plate (2, 2') of the mounting head (1), the helical spring (6) and the extension rod (5) of the channel (4) are made of steel.

**Patentansprüche**

1. Wischerarm, beispielsweise für Motorfahrzeuge, mit einem eine Kappe (3) aufweisenden Montagekopf (1) und mit einem drehbar am Montagekopf (1) befestigten Kanal (4), dadurch gekennzeichnet, daß die Kappe (3) des Montagekopfes (1) mit zwei im wesentlichen parallel zur Längsachse des Wischerarms über ein Gelenk (C—D) zwischen dem Montagekopf (1) und dem Kanal (4) hinausverlaufende Ansätze (3a, 3b) versehen ist und daß die Ansätze (3a, 3b) der Kappe (3) mit Mitteln (14a, 15a und 14b, 15b) zur Einstellung des Kanals (4) in wenigstens zwei unterschiedlichen Stellungen in Bezug auf den Montagekopf (1) versehen sind.

2. Wischerarm nach Anspruch 1, dadurch gekennzeichnet, daß auf dem Kanal (4) Einstellmittel (16a, 16b) vorgesehen sind, welche mit den auf den Ansätzen (3a, 3b) der Kappe (3) vorgesehenen Einstellmitteln (14a, 15a und 14b, 15b) zusammenzuwirken vermögen.

3. Wischerarm nach Anspruch 1, dadurch gekennzeichnet, daß die auf den Ansätzen (3a, 3b) der Kappe (3) vorgesehenen Einstellmittel durch zie Ausnehmungen (15a, 15b) mit gegebenen Abmessungen für eine erste Stellung des Kanals (4) und zwei weiteren Ausnehmungen (14a, 14b) mit größeren Abmessungen für eine zweite Stellung des Kanals (4) bestehen.

4. Wischerarm nach Anspruch 2 und 3, dadurch gekennzeichnet, daß die Einstellmittel auf dem Kanal (4) aus zwei Ansätzen (16a und 16b) bestehen, welche mit den vier Ausnehmungen (14a, 15a und 14b, 15b) der Ansätze (3a, 3b) der Kappe (3) zusammenzuwirken vermögen.

5. Wischerarm nach Anspruch 1, dadurch gekennzeichnet, daß die Ausnehmungen (14a, 15a und 14b, 15b) der Ansätze (3a, 3b) der Kappe (3) und die Ansätze (16a und 16b) des Kanals (4) Dreiecksform besitzen.

6. Wischerarm nach Anspruch 1, dadurch gekennzeichnet, daß die Kappe (3) des Montagekopfs (1) in einer zur Längsachse des Wischerarms im wesentlichen parallelen Richtung zu gleiten vermögen und daß der Montagekopf (1) zu diesem Zweck mit zwei Öffnungen (20a, 20b) versehen ist, durch die sich die beiden Ansätze (3a, 3b) der Kappe (3) erstrecken.

7. Wischerarm nach Anspruch 1, dadurch gekennzeichnet, daß das Gelenk zwischen dem Montagekopf (1) und dem Kanal (4) aus einer halbkreisförmigen Ausnehmung (18) im Montagekopf (1) besteht, welche mit einer auf dem Kanal (4) vorgesehenen entsprechenden halbzylindrischen Fläche (19) zusammenzuwirken vermag.

8. Wischerarm nach Anspruch 7, dadurch gekennzeichnet, daß die halbzylindrische Fläche (19) des Kanals (4) mit zwei Schlitzen (4', 4'') versehen ist, durch die sich die beiden Ansätze (3a, 3b) der Kappe (3) erstrecken.

9. Wischerarm nach Anspruch 7, dadurch gekennzeichnet, daß der Montagekopf (1) zwei sich im wesentlichen parallel zur Längsachse des Wischerarms über das Gelenk (C—D) zwischen dem Montagekopf (1) und dem Kanal (4) hinauserstreckende Ansätze (1a, 1b) umfaßt und daß die Ansätze auf (1a, 1b) des Montagekopfs (1) jeweils mit einer halbzylindrischen Ausnehmung (13) versehen sind, welche die halbzylindrischen Fläche (19) des Kanals (4) aufzunehmen vermögen.

10. Wischerarm nach Anspruch 1, bei dem der Montagekopf (1) eine Basisplatte (2, 2') umfaßt und bei dem der Kanal (4) einen Ansatzstift (5) aufweist, an dessen freiem Ende Verbindungsmittel für die Verbindung mit einem Wischerblatt vorgesehen sind, dadurch gekennzeichnet, daß die Basisplatte (2, 2') des Montagekopfs (1) durch eine Schraubenfeder (6) mit dem Ansatzstift (5) des Kanals (4) verbunden ist.

11. Wischerarm nach Anspruch 10, dadurch gekennzeichnet, daß der Montagekopf (1) und seine Basisplatte (2, 2') aus einem Stück hergestellt sind.

12. Wischerarm nach Anspruch 10, dadurch gekennzeichnet, daß der Montagekopf (1), seine Kappe (3) und der Kanal (4) aus einem geeigneten Kunstoff hergestellt sind, und daß die Basisplatte (2, 2') des Montagekopfs (1), die Schraubenfeder (6) und der Ansatzstift (5) des Kanals (4) aus Stahl hergestellt sind.

**Revendications**

1. Bras de balayage, par exemple pour véhicules à moteur, comprenant une tête de monture (1) pourvue d'un chapeau (3), et un canal (4) qui est attaché, de manière à pouvoir tourner, à la tête de monture (1), caractérisé en ce que le chapeau (3) de la tête de monture (1) est pourvu de deux prolongements (3a, 3b) s'étendant sensiblement parallèlelment à l'axe longitudinal du bras de balayage, au-delà de l'articulation (C—D) entre la tête de monture (1) et le canal (4), et en ce que ces prolongements (3a, 3b) du chapeau (3) sont pourvus de moyens (14a, 15a et 14b, 15b) propres à loger le canal (4) dans au moins deux positions différentes, par rapport à la tête de monture (1).

2. Bras de balayage suivant la revendication 1, caractérisé en ce que, sur le canal (4), on a prévu des moyens de logement (16a, 16b) qui sont capables de coopérer avec les moyens de logement (14a, 15a et 14b, 15b) prévus sur les prolongements (3a, 3b) du chapeau (3).

3. Bras de balayage suivant la revendication 1, caractérisé en ce que les moyens de logement prévus sur les prolongements (3a, 3b) du chapeau (3) consistent en duex logements (15a, 15b) ayant des dimensions données pour un première position de logement du canal (4), et en duex autres logements (14a, 14b) ayant des dimensions plus grandes pour une seconde position du canal (4).

4. Bras de balayage suivant les revendications 2 ou 3, caractérisé en ce que les moyens de logement sur le canal (4) consistent en deux saillies (16a et 16b) capables de coopérer avec les quatre logements (14a, 15a et 14b, 15b) de prolongements (3a, 3b) du chapeau (3).

5. Bras de balayage suivant la revendication 4, caractérisé en ce que les logements (14a, 15a et 14b, 15b) des prolongements (3a, 3b) du chapeau (3) et les saillies (16a et 16b) du canal (4) ont une forme triangulaire.

6. Bras de balayage suivant la revendication 1, caractérisé en ce que le chapeau (3) de la tête de monture (1) est capable de glisser dans une direction sensiblement parallèle à l'axe longitudinal du bras de balayage et en ce que, à cette fin, la tête de monture (1) est pourvue de deux ouvertures (20a, 20b) à travers lesquelles passent les deux prolongements (3a, 3b) du chapeau (3).

7. Bras de balayage suivant la revendication 1, caractérisé en ce que l'articulation entre la tête de monture (1) et le canal (4) consiste en un longement semi-cylindrique (18) dans la tête de monture (1), logement semi-cylindrique (18) qui est capable de coopérer avec une surface semi-cylindrique correspondante (19) sur le canal (4).

8. Bras de balayage suivant la revendication 7, caractérisé en ce que la surface semi-cylindrique (19) du canal (4) est pourvue de deux fentes (4', 4'') à travers lesquelles passent les deux prolongements (3a, 3b) du chapeau (3).

9. Bras de balayage suivant la revendication 7, caractérisé en ce que la tête de monture (1) comprend deux prolongements (1a, 1b) qui s'étendent sensiblement parallèlement à l'axe longitudinal du bras de balayage, au-delà de l'articulation (C—D) entre la tête de monture (1) et le canal (4), et en ce que les prolongements (1a, 1b) de la tête de monture (1) sont pourvue chacun d'un logement semi-cylindrique (13) capable de recevoir la surface semi-cylindrique du canal (4).

10. Bras de balayage suivant la revendication 1, dans lequel la tête de monture (1) comprend une plaque de base (2, 2') et dans lequel le canal (4) comprend une tige de prolongement (5) à le'extrémité libre de laquelle sont prévus des moyens de liaison pour y relier une lame d'essuie-glace, caractérisé en ce que la plaque de base (2, 2') de la tête de monture (1) est articulée à la tige de prolongement (5) du canal (4) par un ressort hélicoïdal (6).

11. Bras de balayage suivant la revendication 10, caractérisé en ce que la tête de monture (1) et sa plaque de base (2, 2') sont faites d'une pièce.

12. Bras de balayage suivant la revendication 10, caractérisé en ce que la tête de monture (1), son chapeau (3) et le canal (4) sont faits d'une matière plastique appropriée, et en ce que la plaque de base (2, 2') de la tête de monture (1), le ressort hélicoïdal (6) et la tige de prolongement (5) du canal (4) sont faits d'acier.

EP 0 209 276 B1

FIG. 1

FIG. 2

FIG. 4

FIG. 3

FIG. 5

1

FIG. 6

FIG. 7

FIG. 8